# EUROPÄISCHE PATENTSCHRIFT

(11) **EP 2 019 346 B1**
(45) Veröffentlichungstag und Bekanntmachung des Hinweises auf die Patenterteilung: **22.12.2021**
(21) Anmeldenummer: 08006834.9
(22) Anmeldetag: 04.04.2008
(51) Int. Cl.: G05B 19/042, E04F 10/06

(54) **Markisenmotorsteuerung**
Marquee motor control
Commande de moteur de stores

(30) Priorität: 23.07.2007 DE 102007034729
(43) Veröffentlichungstag der Anmeldung: 28.01.2009
(73) Patentinhaber: Weinor GmbH & Co. KG, 50829 Köln (DE)
(72) Erfinder: Stawski, Karl-Heinz, 50769 Köln (DE)
(74) Vertreter: Patentanwaltskanzlei Methling

(56) Entgegenhaltungen:
- EP-A1- 0 916 781
- EP-A2- 0 940 736
- EP-A2- 1 564 364
- WO-A1-2007/055574
- FR-A1- 2 808 047

## Beschreibung

Die Erfindung betrifft eine Markise mit einer elektromotorisch angetriebenen Tuchwelle, von der ein Tuch abwickelbar ist, wobei das vordere Ende des Tuches an einem Ausfahrprofil befestigt ist, wobei der elektrische Antriebsmotor der Tuchwelle mittels einer Steuervorrichtung in beiden Drehrichtungen ansteuerbar und betätigbar ist, so dass die Markise ein- und ausfahrbar ist, wobei die Steuervorrichtung einen Versorgungsanschluss zur Verbindung mit einer Phase eines Stromversorgungsnetzes und ein Modul zum Empfang und zur Verarbeitung von Funkfernbedienungssignalen aufweist, wobei die Steuervorrichtung Mittel aufweist, um zumindest eine weitere Versorgungsleitung zu schalten, insbesondere mit einer beliebigen Spannung und/oder beliebigen Stromstärke zu beaufschlagen.

Derartige Markisen sind aus der EP 1 564 364 A2 und der EP 0 916 718 A1 bekannt.

Aus der FR 2 808 047 A1 ist eine Markise bekannt mit einer elektromotorisch angetriebenen Tuchwelle, von der ein Tuch abwickelbar ist, wobei das vordere Ende des Tuches an einem Ausfahrprofil befestigt ist, wobei der elektrische Antriebsmotor der Tuchwelle mittels einer Steuervorrichtung in beiden Drehrichtungen ansteuerbar und betätigbar ist, so dass die Markise ein- und ausfahrbar ist, wobei die Steuervorrichtung einen Versorgungsanschluss zur Verbindung mit einer Phase eines Stromversorgungsnetzes und ein Modul zum Empfang und zur Verarbeitung von Funkfernbedienungssignalen aufweist.

Derartige Markisen mit elektromotorisch angetriebenen Tuchwellen sind bekannt. Häufig ist es wünschenswert, zusätzlich zu dem elektrischen Antriebsmotor der Tuchwelle weitere elektrische Einrichtungen wie z. B. eine in die Markise integrierte Beleuchtung oder Heizung ebenfalls mittels einer Fernbedienung anzusteuern. Bei den bekannten Lösungen wird dabei jedem zu steuernden Gerät ein Funkempfänger zugeordnet. Nachteilig ist dabei, dass sich mehrere Funkempfänger gegenseitig beeinflussen und stören, so dass diese einen Abstand von mindestens 0,5 m untereinander einhalten müssen, wobei jeder zu steuernden elektrischen Einrichtung ein einzelner Funkempfänger zugeordnet werden muss und aufgrund der einzuhaltenden Mindestabstände zwischen mehreren Funkempfängern sich ein hoher Aufwand für die Verkabelung innerhalb der Sonnenschutzanlage, insbesondere eines Markisengehäuses, ergibt. Hieraus resultieren hohe Kosten für die Verkabelung und die Mehrzahl von Funkempfängern, die vorgesehen werden müssen.

Die Aufgabe der Erfindung ist es, eine gattungsgemäße Markise derart weiterzubilden, dass es möglich ist, weitere elektrisch betätigte Einrichtungen neben dem elektrischen Antriebsmotor der Tuchwelle mittels einer Fernbedienung ansteuern und betätigen zu können, wobei der erforderliche Installationsaufwand reduziert wird und eine Fehlbedienung der Anlage verhindert werden soll. Zusätzlich soll ein beschädigungsfreies Einfahren der Markise ermöglicht werden.

Erfindungsgemäß wird diese Aufgabe durch eine Markise gemäß Anspruch 1 gelöst.

Besonders vorteilhaft ist dabei, dass die Steuervorrichtung der erfindungsgemäßen Markise ein integriertes Modul zum Empfang und zur Verarbeitung von Funkfernbedienungssignalen aufweist und dass die Steuervorrichtung derart ausgebildet ist, dass sie geeignet ist, einerseits den elektrischen Antriebsmotor der Tuchwelle in beiden Drehrichtungen anzusteuern und zu betätigen, so dass die Markise ein- und ausfahrbar ist, und zusätzlich hierzu die Steuervorrichtung geeignet ist, zumindest eine weitere Versorgungsleitung, beispielsweise für eine Beleuchtung oder eine Beheizung, zu schalten, insbesondere zu dimmen. Dadurch, dass mehrere Funktionen, die mittels einer Fernbedienung angesteuert werden können, in der Steuervorrichtung integriert sind, wird der Aufwand an Verkabelung gegenüber dem Stand der Technik deutlich reduziert und es liegt eine vereinfachte Lösung mit deutlich geringeren Kosten gegenüber dem Stand der Technik vor. Besonders vorteilhaft ist dabei, dass die Steuerung der erfindungsgemäßen Markise lediglich eine Zuleitung vom Stromversorgungsnetz, d. h. die Verbindung mit einer Phase des Stromversorgungsnetzes, benötigt, und sie geeignet ist, dass neben der Steuerung des Aus- bzw. Einfahrens der Markise weitere Leitungen geschaltet, insbesondere gedimmt werden können.

Vorteilhafte Ausgestaltungen der Erfindung sind in den Unteransprüchen angegeben.

So ist es besonders vorteilhaft, wenn die Steuervorrichtung der Markise eine Stromstärkeüberwachungseinheit aufweist und/oder mehrere Versorgungsleitungen mit vorgebbaren Prioritäten ansteuerbar sind.

Hierdurch ist es möglich, eine intelligente Steuervorrichtung zu schaffen, indem zum Beispiel der Ansteuerung des Ein- oder Ausfahrens der Markise bei manueller Betätigung der Funkfernbedienung oder aber bei dem Auslösen eines Einfahrens der Markise durch Überschreitung eines Grenzwertes, beispielsweise eines Windlastsensors, die Ansteuerung des elektrischen Antriebsmotors der Tuchwelle mit höchster Priorität erfolgt, wobei gleichzeitig eine Überwachung der Stromstärke der Verbindung mit der Phase des Stromversorgungsnetzes erfolgt, um eine Überlastung zu vermeiden, wenn beispielsweise gleichzeitig eine Beheizungseinrichtung bei voller Leistung betrieben wird. In diesem Fall ist es möglich, die Heizleistung zu reduzieren oder die Beheizung ganz auszuschalten, um ein zuverlässiges Ein- oder Ausfahren der Markise zu ermöglichen. Die so geschaffene intelligente Steuervorrichtung gewährleistet einen jederzeit sicheren Betrieb, ohne dass es zu einer Netzüberlastung kommen kann.

Vorzugsweise sind Mittel vorgesehen, um eine Endposition der Markise in der Steuervorrichtung dadurch einzuspeichern, dass auf ein bestimmtes Signal der Fernbedienung zwei Stromspannungsversorgungsleitungen gleichzeitig durchgeschaltet werden, wobei die eine Stromspannungsversorgungsleitung der Ansteuerung des Ausfahrens der Markise und die andere Stromspannungsversorgungsleitung der Ansteuerung des Einfahrens der Markise dient.

Hierdurch ist es auf bequeme Art und Weise möglich, die Endpositionen der Markise, d. h. die Position "vollständig eingefahren" sowie die Position "vollständig ausgefahren" in der Steuervorrichtung einzuspeichern.

Besonders vorteilhaft ist dabei, dass die Festlegung und Erfassung der Endpositionen der elektrisch angetriebenen Markise unter Verwendung einer Fernbedienung möglich ist und somit der Ausfahrvorgang unmittelbar überwacht werden kann, da eine Bedienung mittels einer Fernbedienung standortunabhängig im Bereich der Fernbedienung ist und damit eine bessere Beobachtung des Ausfahrvorgangs erfolgen kann, da es nicht erforderlich ist, eine fest installierte Bedieneinrichtung zu betätigen.

Vorzugsweise weist die Steuervorrichtung Mittel zur Verarbeitung der Signale mehrerer Sensoren und/oder mehrerer Funkbefehle auf. Bevorzugt ist die Steuervorrichtung über Funk mit zumindest einem Sensor zur Überwachung eines Umgebungsparameters koppelbar und es sind Mittel zu Verarbeitung dieses Sensorsignals vorgesehen, insbesondere kann eine Kopplung mit einem Temperatursensor, einem Sensor zur Erfassung der Lichtstärke, wie beispielsweise einer Photozelle, einem Sensor zur Erfassung der Windstärke, einem Sensor zur Erfassung von Niederschlägen und/oder einem Bewegungssensor erfolgen. Hierdurch ist es möglich, eine Vielzahl von Umgebungsparametern bei der Ansteuerung der Markise sowie zumindest einer weiteren Einrichtung, wie beispielsweise einer Beleuchtung, zu berücksichtigen. So ist es beispielsweise möglich, bei Ansprechen eines Bewegungsmelders die Beleuchtung einzuschalten und bei Feststellung einer Grenzwertüberschreitung der Windstärke, d. h. bei Überschreitung eines vorgebbaren Grenzwertes für die Windstärke, das Einfahren der Markise über die Steuervorrichtung auszulösen. Alternativ oder kumulativ können weitere Umgebungsparameter bei der Ansteuerung der gesamten Anlage berücksichtigt werden. Vorzugsweise erfolgt dabei eine Ansteuerung der verschiedenen Versorgungsleitungen mit vorgebbaren Prioritäten.

In einer bevorzugten Ausführungsform weist die Steuervorrichtung einen Sender für Funksignale und/oder Infrarotsignale auf, der die momentan automatisch und/oder manuell eingestellten Steuerungszustände und/oder die Messwerte der Sensoren zu einer Funkfernbedienung überträgt, wobei diese Funkfernbedienung einen Empfänger und ein Anzeigegerät zur Wiedergabe der übermittelten Steuerungszustände und/oder Messwerte aufweist.

Hierdurch ist es in vorteilhafter Weise möglich, eine Zwei-Wege-Funkverbindung aufzubauen, wobei der Benutzer auf seinem Handgerät eine Rückmeldung der Anlage erhält und die eingestellten Parameter und Steuerungszustände in bequemer Weise ablesen kann.

Vorzugsweise handelt es sich bei dem Antriebsmotor um einen Rohrmotor, insbesondere dergestalt, dass dieser Rohrmotor in die elektromotorisch angetriebene Tuchwelle der Markise einsetzbar ist. Insbesondere handelt es sich vorzugsweise um einen Rohrmotor mit integrierter Steuerung. Hierdurch ist eine Platz sparende Gesamtkonstruktion der erfindungsgemäßen Markise in vorteilhafter Weise möglich.

Dadurch, dass es durch die Erfindung möglich ist, die Steuervorrichtung über Funk mit weiteren Sensoren zur Überwachung von Umgebungsparametern zu koppeln, d. h. dergestalt, dass diese Sensoren über ein Funkmodul zur Übertragung des Sensorsignales verfügen, kann auf besonders vorteilhafte Weise eine Gesamtanlage erstellt werden mit einem minimalen Aufwand an Verkabelung und Instrumentierung.

Das in Ausfahrrichtung vordere Ende des Tuches ist an einem Ausfahrprofil befestigt. Erfindungsgemäß weist das Ausfahrprofil eine elektromotorisch angetriebene Volantwelle auf, von der ein Volant abwickelbar ist, wobei der elektrische Antriebsmotor der Volantwelle mittels der Steuervorrichtung in beiden Drehrichtungen ansteuerbar und betätigbar ist, so dass der Volant ein- und ausfahrbar ist.

Es ist somit möglich, mittels einer einzigen Steuervorrichtung oder Steuereinheit den Tuchwellenmotor zum Aus- und Einfahren der Markise, den Volantmotor zum Aus- und Einfahren des Volants sowie eine Mehrzahl weiterer elektrischer Versorgungsleitungen für beispielsweise eine Beleuchtung oder dergleichen zur steuern, d.h. zu schalten.

Dabei ist die Steuervorrichtung derart ausgestaltet, dass ein Einfahren des Markisentuches nur bei vollständig eingefahrenem Volant erfolgen kann, d.h. dass die Steuervorrichtung eine Vorrangschaltung bei der Betätigung der Motoren für den Antrieb der Volantwelle und der Tuchwelle aufweist, dergestalt, dass bei einem Einfahrbefehl für die Tuchwelle bei zumindest teilweise oder vollständig ausgefahrenem Volant zunächst eine Ansteuerung des Volantwellenmotors erfolgt, um den Volant vollständig einzufahren, und erst nach einem vollständigen Einfahren des Volants die Ansteuerung des Tuchwellenmotors zum Einfahren des Markisentuches erfolgt.

Durch diese Vorrangschaltung erfolgt ein vollständiges Einfahren der gesamten Sonnenschutzanlage, ohne dass einzelne Teile beschädigt werden können. Eine Fehlbedienung der Anlage wird hierdurch verhindert.

Die Steuervorrichtung weist hierzu pro zu steuerndem Motor, unabhängig ob es sich um den Tuchwellenmotor zum Aus- und Einfahren des Tuches oder den Volantwellenmotor im Ausfahrprofil zum Aus- und Einfahren des Volants handelt, jeweils zwei Relais zur Ansteuerung beider Drehrichtungen zum Aus- und Einfahren, sowie jeweils ein weiteres Relais und/oder Potentiometer zur Ansteuerung jeder weiteren Versorgungsleitung auf.

## Patentansprüche

1. Markise mit einer elektromotorisch angetriebenen Tuchwelle, von der ein Tuch abwickelbar ist, wobei das vordere Ende des Tuches an einem Ausfahrprofil befestigt ist, wobei der elektrische Antriebsmotor der Tuchwelle mittels einer Steuervorrichtung in beiden Drehrichtungen ansteuerbar und betätigbar ist, so dass die Markise ein- und ausfahrbar ist, wobei die Steuervorrichtung einen Versorgungsanschluss zur Verbindung mit einer Phase eines Stromversorgungsnetzes aufweist und wobei die Steuervorrichtung ein Modul zum Empfang und zur Verarbeitung von Funkfernbedienungssignalen aufweist, wobei die Steuervorrichtung Mittel aufweist, um zumindest eine weitere Versorgungsleitung zu schalten, insbesondere mit einer beliebigen Spannung und/oder beliebigen Stromstärke zu beaufschlagen, **dadurch gekennzeichnet, dass** das Ausfahrprofil eine elektromotorisch angetriebenen Volantwelle aufweist, von der ein Volant abwickelbar ist, wobei der elektrische Antriebsmotor der Volantwelle mittels der Steuervorrichtung in beiden Drehrichtungen ansteuerbar und betätigbar ist, so dass der Volant ein- und ausfahrbar ist, wobei die Steuervorrichtung derart ausgestaltet ist, dass ein Einfahren des Markisentuches erst bei vollständig eingefahrenem Volant ausgelöst wird.

2. Markise nach Anspruch 1, **dadurch gekennzeichnet, dass** die Steuervorrichtung eine Stromstärkeüberwachungseinheit aufweist und/oder mehrere Versorgungsleitungen mit vorgebbaren Prioritäten ansteuerbar sind.

3. Markise nach Anspruch 1 oder 2, **dadurch gekennzeichnet, dass** Mittel vorgesehen sind, um eine Endposition der Markise in der Steuervorrichtung dadurch einzuspeichern, dass auf ein bestimmtes Signal der Funkfernbedienung zwei Strom-/Spannungsversorgungsleitungen, von denen die eine Strom-/Spannungsversorgungsleitung der Ansteuerung des Ausfahrens der Markise und die andere Strom-/Spannungsversorgungsleitung der Ansteuerung des Einfahrens der Markise dient, gleichzeitig durchgeschaltet werden.

4. Markise nach einem der vorherigen Ansprüche, **dadurch gekennzeichnet, dass** die Steuervorrichtung Mittel zur Verarbeitung der Signale mehrerer Sensoren und/oder mehrerer verschiedener Funkbefehle aufweist.

5. Markise nach einem der vorherigen Ansprüche, **dadurch gekennzeichnet, dass** die Steuervorrichtung über Funk mit zumindest einem Sensor zur Überwachung eines Umgebungsparameters koppelbar ist und Mittel zur Verarbeitung des Sensorsignals aufweist, insbesondere mit einem Temperatursensor und/oder einem Sensor zur Erfassung der Lichtstärke, insbesondere einer Photozelle, und/oder einem Sensor zur Erfassung der Windstärke und/oder einem Sensor zur Erfassung von Niederschlägen und/oder einem Bewegungssensor koppelbar ist.

6. Markise nach einem der vorherigen Ansprüche, **dadurch gekennzeichnet, dass** die Steuervorrichtung einen Sender für Funksignale und/oder Infrarotsignale aufweist, der die momentan automatisch und/oder manuell eingestellten Steuerungszustände und/oder die Messwerte der Sensoren zu einer Funkfernbedienung überträgt, wobei diese Funkfernbedienung einen Empfänger und ein Anzeigegerät zur Wiedergabe der übermittelten Steuerungszustände und/oder Messwerte aufweist.

7. Markise nach einem der vorherigen Ansprüche, **dadurch gekennzeichnet, dass** es sich bei dem Antriebsmotor um einen Rohrmotor handelt, insbesondere um einen Rohrmotor mit integrierter Steuerung.

## Claims

1. Marquee having an electromotively-driven fabric shaft from which a fabric can be unwound, wherein the front end of the fabric is fastened to an extension profile, wherein the electrical drive motor of the fabric shaft can be driven and actuated by means of a control device in both directions of rotation such that the marquee can be retracted and extended, wherein the control device has a supply connection for connecting to a phase of a power supply network and wherein the control device has a module for receiving and for processing radio remote control signals, wherein the control device has means in order to connect at least one further supply line, in particular for applying a freely chosen voltage and/or freely chosen current strength, **characterised in that** the extension profile has an electromotively driven valance shaft from which a valance can be unwound, wherein the electrical drive motor of the valance shaft can be driven and actuated by means of a control device in both directions of rotation such that the valance can be retracted and extended, wherein the control device is configured such that a retraction of the marquee fabric is triggered only when the valance is completely retracted.

2. Marquee according to claim 1, **characterised in that** the control device has a current strength monitoring unit and/or a plurality of supply lines can be controlled with predefined priorities.

3. Marquee according to claim 1 or 2, **characterised in that** means are provided in order to store an end position of the marquee in the control device **in that**, in response to a specific signal of the radio remote control, two current/voltage supply lines, of which the one current/voltage supply line serves to control the extension of the marquee and the other current/voltage supply line serves to control the retraction of the marquee, are simultaneously through-connected.

4. Marquee according to any of the preceding claims, **characterised in that** the control device has means for processing the signals of a plurality of sensors and/or a plurality of different radio commands.

5. Marquee according to any of the preceding claims, **characterised in that** the control device can be coupled via radio with at least one sensor for monitoring an environmental parameter and has means for processing the sensor signal, in particular can be coupled to a temperature sensor and/or a sensor for detecting the light strength, in particular a photocell, and/or a sensor for detecting the wind strength and/or a sensor for detecting precipitations and/or a movement sensor.

6. Marquee according to any of the preceding claims, **characterised in that** the control device has a transmitter for radio signals and/or infrared signals which transmits the current automatically and/or manually set control states and/or the measurement values of the sensors to a radio remote control, wherein this radio remote control has a receiver and a display device for representing the transmitted control states and/or measurement values.

7. Marquee according to any of the preceding claims, **characterised in that** the drive motor is a tubular drive, in particular a tubular drive with integrated controller.

## Revendications

1. Store avec un arbre à toile entraîné par moteur électrique, duquel une toile peut être déroulée, dans lequel l'extrémité avant de la toile est fixée à un profilé de sortie, dans lequel le moteur d'entraînement électrique de l'arbre à toile peut être commandé et actionné dans les deux sens de rotation au moyen d'un dispositif de commande, de sorte que le store peut être rentré et sorti, dans lequel le dispositif de commande présente un raccord d'alimentation pour la connexion à une phase d'un réseau d'alimentation électrique et dans lequel le dispositif de commande présente un module pour recevoir et traiter des signaux de télécommande radio, dans lequel le dispositif de commande présente des moyens pour commuter au moins une ligne d'alimentation supplémentaire, en particulier pour appliquer une tension quelconque et/ou une intensité de courant quelconque, **caractérisé en ce que** le profilé de sortie présente un arbre de volant entraîné par moteur électrique, duquel un volant peut être déroulé, dans lequel le moteur d'entraînement électrique de l'arbre de volant peut être commandé et actionné dans les deux sens de rotation au moyen du dispositif de commande, de sorte que le volant peut être rentré et sorti, dans lequel le dispositif de commande est conçu de sorte que la rentrée de la toile de store n'est déclenchée que lorsque le volant est entièrement rentré.

2. Store selon la revendication 1, **caractérisé en ce que** le dispositif de commande présente une unité de surveillance d'intensité de courant et/ou plusieurs lignes d'alimentation peuvent être commandées avec des priorités prédéterminables.

3. Store selon la revendication 1 ou 2, **caractérisé en ce que** des moyens sont prévus pour mémoriser une position finale du store dans le dispositif de commande, **en ce que** deux lignes d'alimentation en courant/tension, dont l'une ligne d'alimentation en courant/tension sert à commander la sortie du store et l'autre ligne d'alimentation en courant/tension sert à commander la rentrée du store, sont commutées simultanément en réponse à un certain signal de la télécommande radio.

4. Store selon l'une quelconque des revendications précédentes, **caractérisé en ce que** le dispositif de commande présente des moyens de traitement des signaux de plusieurs capteurs et/ou de plusieurs commandes radio différentes.

5. Store selon l'une quelconque des revendications précédentes, **caractérisé en ce que** le dispositif de commande peut être couplé par radio avec au moins un capteur pour surveiller un paramètre d'environnement et présente des moyens pour traiter le signal de capteur, en particulier peut être couplé avec un capteur de température et/ou un capteur pour détecter l'intensité lumineuse, en particulier une cellule photoélectrique, et/ou un capteur pour détecter la force du vent et/ou un capteur pour détecter des précipitations et/ou un capteur de mouvement.

6. Store selon l'une quelconque des revendications précédentes, **caractérisé en ce que** le dispositif de commande présente un émetteur de signaux radio et/ou de signaux infrarouges, qui transmet à une télécommande radio les états de commande et/ou les valeurs de mesure des capteurs actuellement réglés automatiquement et/ou manuellement, dans lequel cette télécommande radio présente un récepteur et un appareil d'affichage pour reproduire les états de commande et/ou les valeurs de mesure transmis.

7. Store selon l'une quelconque des revendications précédentes, **caractérisé en ce que** le moteur d'entraînement est un moteur tubulaire, en particulier un moteur tubulaire à commande intégrée.
